# EUROPEAN PATENT APPLICATION

(11) **EP 3 825 940 A1**
(43) Date of publication of application: **26.05.2021**
(21) Application number: 18926793.3
(22) Date of filing: 18.07.2018
(51) Int. Cl.: G06Q 20/08

(54) **ELECTRONIC MONEY MEDIATION SYSTEM AND ELECTRONIC MONEY MEDIATION METHOD**

(71) Applicant: JP Media Direct Co., Ltd., Tokyo 105-0001 (JP)
(72) Inventor: KAGESHIMA, Taku, Tokyo 105-0001 (JP); KUMAGAWA, Yoshizane, Tokyo 105-0001 (JP)
(74) Representative: Banzer, Hans-Jörg
(86) International application number: PCT/JP2018/026813
(87) International publication number: WO 2020/016945

(57) **Abstract**

Provided are an electronic money mediation system and an electronic money mediation method for enabling enhancement of the convenience of transactions using different types of electronic money. The electronic money mediation system is provided with a service server (1) that mediates payment using electronic money and reception thereof. A transaction information acquisition unit (11) acquires transaction information by associating payment information from a payer terminal (2) with reception information from a receiver terminal (3). A payment reception processing unit (12) acknowledges completion of a deposit made by a payer (20) into a first account of the service server (1), for first electronic money which is the same type as that used in the payment made by the payer (20). In response to acknowledgement of the deposit made by the payer (20), a payment transfer processing unit (14) remits, from a second account (61) for second electronic money of the service server (1) to a receiver (30), an amount of second electronic money corresponding to the paid amount of the first electronic money deposited by the payer (20) into the first account (41).

## Description

### TECHNICAL FIELD

The present disclosure relates to an electronic money mediation system and an electronic money mediation method corresponding to a transaction using multiple types of electronic money.

### BACKGROUND ART

Conventionally, settlement using electronic money has been frequently performed in actual stores and virtual stores using the internet or the like. Electronic money is easy to handle and thus highly convenient as a settlement means alternative to cash.

While currency normally has one type, electronic money has multiple types and, even a little, has a limit to how to use electronic money according to its types. The widespread use of various types of electronic money improves the convenience for electronic money. As the use of electronic money becomes more popular, sellers have to handle settlement using multiple types of electronic money and purchasers have to prepare electronic money usable for settlement.

Patent Document 1 describes an example of a technique capable of performing settlement even if the electronic money used by a purchaser differs from the electronic money usable by a seller.

The technique described in Patent Document 1 includes a store information memory that stores a store information database. The store information database includes the information of a designated type designated by a store (recipient) as a type of money received by the store and the information of a designated money transfer destination designated by the store. The technique described in Patent Document 1 includes an electronic money conversion transfer unit that converts electronic money received from a store user (payer) in accordance with the information of the designated type and transfers the converted electronic money to the designated money transfer destination in accordance with the information of the designated money transfer destination.

### PRIOR ART DOCUMENTS

### Patent Document

Patent Document 1: Japanese Laid-Open Patent Publication No. 2002-334285

### SUMMARY OF THE INVENTION

### Problems that the Invention is to Solve

In electronic commerce, part of or all of the transactions are performed on a network. Since all of the transactions on the network are subject to electronic commerce, the area of electronic commerce is tremendously wide. Electronic commerce can include, for example, business-to-business (B-to-B) transaction, business-to-consumer (B-to-C) transaction, and consumer-to-consumer transaction (C-to-C) transaction.

In recent years, with the development of SNS, the number of transactions between public consumers has been increasing. However, purchasers (payers) and sellers (recipients), who are both public consumers, are not always able to use the same type of electronic money. Additionally, it is unrealistic that public consumers are able to perform settlement using multiple types of electronic money like in the store described in Patent Document 1. Consumers using different types of electronic money may have to give up a transaction using electronic money. In this situation, electronic money is not convenient. Such a problem is not limited to transactions between public consumers and may occur in the same manner when a monetary value provided by electronic money is paid or received.

It is an objective of the present invention to provide an electronic money mediation system and an electronic money mediation method capable of increasing the convenience in a transaction between different types of electronic money. Means for Solving the Problem

An electronic money mediation system that solves the above-described problem includes a service server that mediates payment and receipt using electronic money. The service server includes a transaction information acquisition unit that receives payment information from a payer terminal and receives receipt information from a recipient terminal. The transaction information acquisition unit associates the payment information with the receipt information to create transaction information. The electronic money mediation system includes a money receipt processing unit that recognizes completion of deposit from a payer to a first account. The first account is used for a first electronic money, a type of the first electronic money is the same as a type designated for payment from the payer in the transaction information, and the service server acknowledges a balance on the first account. The electronic money mediation system includes a money transfer processing unit that transfers a second electronic money from a second account to a recipient in response to the recognition of the deposit from the payer. The second account is used for the second electronic money, an amount of the second electronic money corresponds to a payment equivalent of the first electronic money that has been deposited from the payer to the first account, a type of the second electronic money is different from the type of the first electronic money and designated for receipt by the recipient in the receipt information, and the service server acknowledges a balance on the second account.

An electronic money mediation method that solves the above-described problem is executed in a service server that mediates payment and receipt using electronic money. The electronic money mediation method includes a transaction information acquisition step that associates payment information received from a payer terminal with receipt information received from a recipient terminal to create transaction information. The electronic money mediation method includes a money receipt processing step that recognizes completion of deposit from a payer to a first account. The first account is used for a first electronic money, a type of the first electronic money is the same as a type designated for payment from the payer in the transaction information, and the service server acknowledges a balance on the first account. The electronic money mediation method includes a money transfer processing step that transfers a second electronic money from a second account to a recipient in response to the recognition of the deposit from the payer. The second account is used for the second electronic money, an amount of the second electronic money corresponds to a payment equivalent of the first electronic money that has been deposited from the payer to the first account, a type of the second electronic money is different from the type of the first electronic money and designated for receipt by the recipient in the receipt information, and the service server acknowledges a balance on the second account.

In such a configuration or method, for example, a transaction using electronic money between the recipient and the payer, who are both public consumers, different types of electronic money can be used. This increases the convenience for a transaction between different types of electronic money.

In a preferred configuration, the transaction information acquisition unit notifies the recipient terminal of the payment information received from the payer terminal and receives from the recipient terminal the receipt information corresponding to the payment information.

In such a configuration, the recipient is notified of payment information. This allows the recipient to know the payment content and to be notified that receipt information needs to be registered. The service server receives the receipt information as a response to the payment information. This allows the payment information and the receipt information to be properly associated with each other. That is, the payer and the recipient can execute settlement more efficiently.

In a preferred configuration, the transaction information acquisition unit verifies the payment information received from the payer terminal with the receipt information received from the recipient terminal to associate the receipt information with the payment information and to create the transaction information.

Such a configuration allows the receipt information and the payment information to be associated with each other. Even if the receipt information and the payment information are acquired at different timings, the receipt information and the payment information can be properly associated with each other.

In a preferred configuration, the receipt information includes information indicating whether the recipient accepts payment by the payer, and on condition that the receipt information includes that the payment is accepted, the service server notifies the payer terminal to deposit to the first account a payment amount of the first electronic money included in the payment information.

In such a configuration, a notification about the transfer of money to the first account is issued on the condition that the recipient 30 accepts payment by the payer. This allows the payer to deposit properly.

In a preferred configuration, on condition that the receipt information includes that the payment is not accepted, the service server notifies the payer terminal that the payment is not accepted and stops receiving deposit from the payer to the first account.

In such a configuration, the payer terminal is notified that payment is not accepted, and the transfer of money from the payer to the first account is not be received. This limits unnecessary deposit performed by the payer.

In a preferred configuration, the service server receives the payment information and an acceptance document from the payer terminal to notify the recipient terminal of the payment information and the acceptance document, and the recipient terminal notifies the service server of the receipt information including whether to accept the acceptance document.

Such a configuration allows the recipient to receive payment after confirming the acceptance document in a bilateral transaction. Accordingly, the safety of a transaction increases.

In a preferred configuration, the money receipt processing unit determines whether an amount of the first electronic money that has been deposited to the first account is correct in reference to a comparison with an amount of the first electronic money included in the payment information.

In such a configuration, it is determined whether the deposited amount of the electronic money is correct. This allows for smooth transaction.

In a preferred configuration, the electronic money mediation system includes an account management unit that manages the balance on the first account and the balance on the second account. The account management unit executes a process of at least one of paying out electronic money from the first account or the second account of which the balance exceeds a set upper limit value or adding electronic money to the first account or the second account of which the balance falls below a set lower limit value.

In such a configuration, the balance on the first account and the balance on the second account are maintained between the upper limit value and the lower limit value set through adjustment that is performed by payout or adding. This maintains the amount of money held in the first account and the second account at a correct amount. Further, when the balance on the first account and the balance on the second account reach the set upper limit value or lower limit value, the number of times of payout or adding is reduced by paying out or adding a large amount of money. This also reduces trouble and commission.

### Effects of the Invention

In the present disclosure, the convenience for a transaction between different types of electronic money is increased.

### BRIEF DESCRIPTION OF THE DRAWINGS

Fig. 1 is a block diagram showing an electronic money mediation system and an electronic money mediation method according to an embodiment.
Fig. 2 is a block diagram showing the configuration of the present embodiment.
Fig. 3 is a sequence chart showing a procedure in the present embodiment.
Fig. 4 is a sequence chart showing a procedure in the present embodiment.
Fig. 5 is a sequence chart showing a procedure in the present embodiment.

### MODES FOR CARRYING OUT THE INVENTION

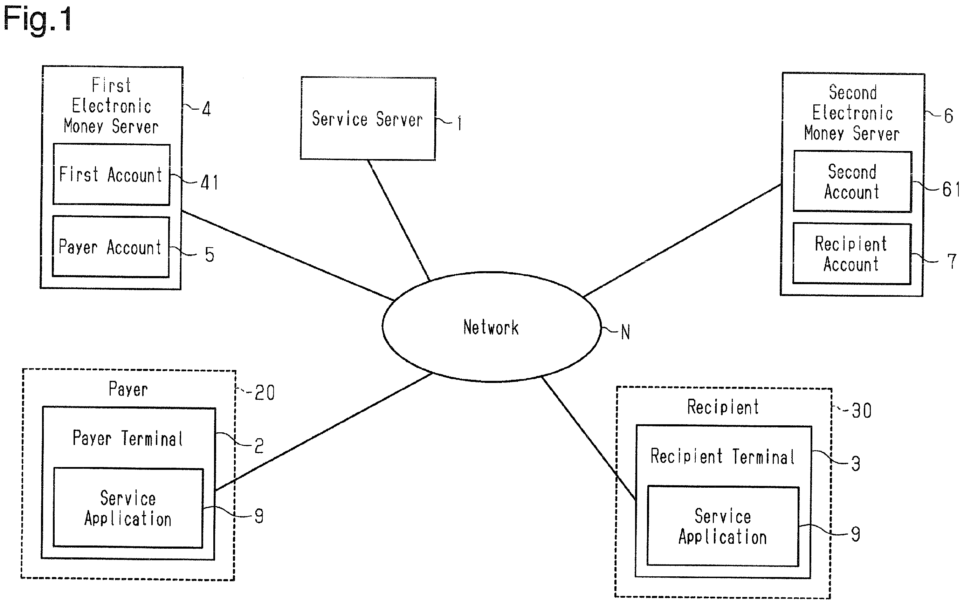

The present embodiment will now be described with reference to Figs. 1 to 5. In the present embodiment, a description will be made for an electronic money mediation system and an electronic money mediation method corresponding to a transaction using multiple types of electronic money.

Electronic money represents a monetary value (hereinafter simply referred to as value) represented by digital data. There are multiple types of electronic money. Thus, even a little, how to use electronic money differs according to its types (there is a small limit). For example, one type of electronic money can be used in a predetermined settlement system that is adjusted such that the electronic money can be handled. Thus, usually, one type of electronic money cannot be used in a payment system such that another type of electronic money can be used. Examples of the electronic money service include LINE Pay (registered trademark) and Yahoo! (registered trademark) Money.

Electronic money users can convert currency such as yen or dollars into electronic money and use the converted electronic money to purchase an item or service. In this context, an item may include a tangible article and digital content such as a data file or application program.

The unit of electronic money may be an original unit that differs from the unit of currency and may be the same unit as currency. Further, electronic money may include, for example, virtual currency and corporation currency called corporation point, which is a point program individually issued by a corporation. In addition, electronic money may include a mode in which information is written in an IC card such that electronic money is used like a credit card (IC card type), a mode in which electronic money circulates as data on the internet (network type), and a prepaid card type. The account holding electronic money is normally under management of a group or a corporation that issued the electronic money and may be arranged in an IC card, a server, a mobile terminal or a combination thereof. The account includes electronic information with which a group or a corporation that manages the account stores the amount of electronic money owned by a user. The account stores the amount of electronic money allocated to users such that the amount of electronic money can be increased and decreased.

The connection via a network N in the present embodiment will now be described with reference to Fig. 1. The network N may be a public communication line, a dedicated communication line, or a combination thereof. A service server 1, a payer terminal 2 operated by a payer 20, a recipient terminal 3 operated by a recipient 30, a first electronic money server 4 that manages first electronic money, and a second electronic money server 6 that manages second electronic money are connected to the network N such that they can communicate with one another. The types of the first electronic money and the second electronic money are different. Settlement with the first electronic money needs a settlement system corresponding to the first electronic money. Settlement with the second electronic money needs a settlement system corresponding to the second electronic money.

The service server 1, the payer terminal 2, the recipient terminal 3, the first electronic money server 4, and the second electronic money server 6 may be entirely or partially owned and managed by different groups, corporations, or individuals.

The summary of the transaction in the present embodiment will now be described.

First, the promise of item sales between individuals (C to C) is concluded between the payer 20 and the recipient 30. The promise of an item sale can be done using, for example, a social networking service (SNS), telephone, letter, and magazine page. The use of SNS will now be described.

SNS is a communication tool that allows individual users to mutually spread and share information. In SNS, a social network is usually formed by users registering friends or the like with the profiles or the like of members listed on a SNS site. SNS simply needs to be a means with which a user can exchange text information one on one, for example, TWITTER (registered trademark), FACEBOOK (registered trademark), LINE (registered trademark), mixi (registered trademark), or Instagram (registered trademark). SNS may include a means such as electronic mail or short message service (SMS). In SNS, on a specific web page allocated to each user, the user can introduce his/her collections and works. Since the webpage has a comment function that allows the user to display comments posted by himself/herself or his/her friends, the sales of the collections or the like are occasionally done on the webpage.

SNS is a communication tool and thus does not include a system for securely and reliably doing a sales transaction. Thus, to execute a sales transaction, for example, the electronic money mediation system of the present embodiment is employed. That is, a sales transaction between the payer 20 and the recipient 30 is executed by transferring money using electronic money via the service server 1. Using the service server 1 for a sales transaction is determined by at least one of the payer 20 and the recipient 30 suggesting the use and the counterpart accepting the suggestion.

When executing a sales transaction using the service server 1, the recipient 30 and the payer 20 respectively register receipt information and payment information on the service server 1. The service server 1 uses the receipt information and the payment information registered for a single sales transaction to generate one piece of transaction information 101 and assigns a transaction ID number to the transaction information 101 to be managed. The receipt information and the payment information need to include information with which a single sales transaction can be recognized, for example, the address and name of a payer, the address and name of a recipient, and a solely-defined transaction ID. The receipt information and the payment information include information required for transaction between individuals. The information required for transaction between individuals includes, for example, payer information 102 and recipient information 103. The information registered in advance on the service server 1 and linked to the payer 20 and the recipient 30 does not have to be registered every time.

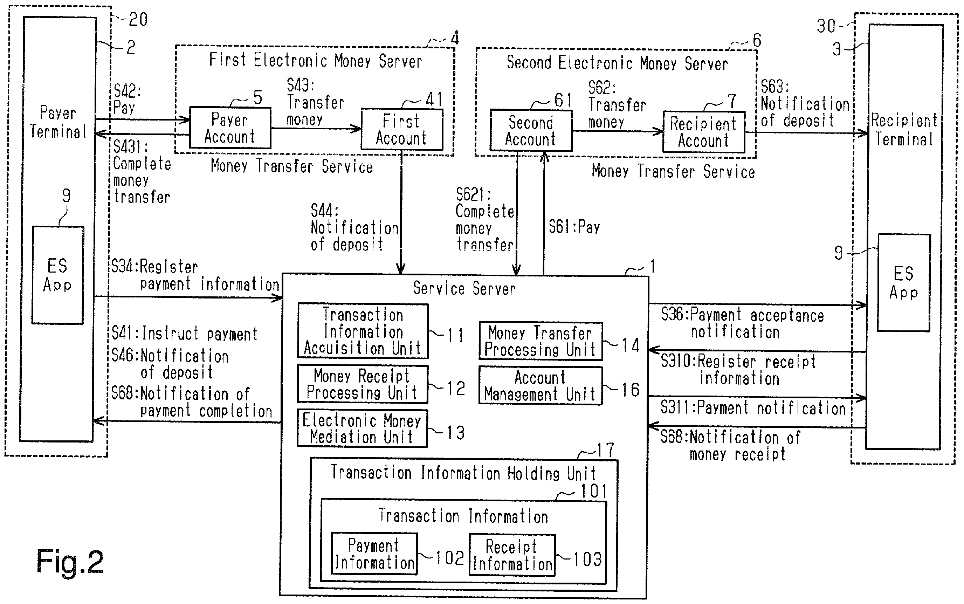

With reference to Fig. 2, the service server 1, the payer terminal 2, the recipient terminal 3, the first electronic money server 4, and the second electronic money server 6 will now be described.

The payer terminal 2 is a computer, such as a mobile phone, a smartphone, a tablet computer, or a personal computer, operated by the payer 20 who pays money. The payer 20 operates the payer terminal 2 to access a SNS server. This allows the payer 20 to check an item posted or introduced by the recipient 30 or promise, for example, sales, donation, or fund assistance by communicating with the recipient 30. Further, the payer 20 operates the payer terminal 2 to exchange payment information related to transaction with the service server 1. Furthermore, the payer 20 operates the payer terminal 2 to operate a payer account 5 allocated to the payer 20 and pay money for a transaction using the first electronic money, which the payer 20 wishes to use in the transaction.

The recipient terminal 3 is a computer, such as a mobile phone, a smartphone, a tablet computer, or a personal computer, operated by the recipient 30 who receives money. The recipient 30 operates the recipient terminal 3 to access a SNS server. This allows the recipient 30 to check a comment from the payer 20 or promise, for example, sales, donation, and fund assistance by communicating with the payer 20. Further, the recipient 30 operates the recipient terminal 3 to exchange receipt information related to transaction with the service server 1. Furthermore, the recipient 30 operates the recipient terminal 3 to operate a recipient allocated to the recipient 30 and confirm receipt of the money for a transaction using the second electronic money, which the recipient 30 wishes to use in the transaction.

A service application (ESApp) 9 is arranged (installed) in each of the payer terminal 2 and the recipient terminal 3. The ESApp 9 provides transaction environments between individuals. The ESApp 9 is an application that facilitates transmission and reception of information to and from the service server 1 coordinated with API. The ESApp 9 can be used by both the payer 20 and the recipient 30. The ESApp 9, for example, displays a state related to a transaction, allows for an operation related to a transaction, and allows for registration of the explanation of a service or business. Further, the ESApp 9 may be able to collect from the payer terminal 2 or the recipient terminal 3 the information of which the service server 1 has to be notified, and notify the service server 1 of the information. In addition, the ESApp 9 may hold the information related to a transaction performed by the payer 20 using the payer terminal 2 or the information related to a transaction performed by the recipient 30 using the recipient terminal 3.

The first electronic money server 4 is a server that manages the circulation of the first electronic money. The first electronic money server 4 maintains and manages an account that can handle the first electronic money server 4 and lends an account to a user. The first electronic money server 4 includes, as a lending account, the payer account 5 and a first account 41. Under the name of the payer 20, the payer 20 manages the income and expenses of electronic money in the payer account 5. Under the name of a person who manages the service server 1, the balance on the first account 41 is acknowledged by the service server 1.

The second electronic money server 6 is a server that manages the circulation of the second electronic money, which differs in type from the first electronic money. The second electronic money server 6 maintains and manages an account that can handle the second electronic money and lends an account to a user. The second electronic money server 6 includes, as a lending account, the recipient account 7 and a second account 61. Under the name of the recipient 30, the recipient 30 manages the income and expenses of electronic money in the recipient account 7. Under the name of a person who manages the service server 1, the balance on the second account 61 is acknowledged by the service server 1.

The first and second electronic money servers 4 and 6 are computers such as personal computers or workstations that execute electronic money service. The first and second electronic money servers 4 and 6 manage the circulation of different types of electronic money. It is assumed that the first and second electronic money servers 4 and 6 enable a known general electronic money service. That is, although not illustrated in the drawings, the electronic money server includes a transaction information acquisition means for acquiring the transaction information between electronic money users, a settlement means for executing settlement with a financial institution system when purchasing electronic money or changing the electronic money back into cash (cashing), and a transaction executing means for executing various types of transaction or processing for electronic money. The amounts of electronic money linked to the users are stored in accounts. Further, the electronic money server may include a history information searching means for searching the history information of electronic money stored in an electronic money wallet, a history information notifying means for notifying a user of the searched information upon request of the user, and a history information protecting means for semi-permanently protecting history information.

The service server 1 is a computer such as a personal computer or a workstation that executes a process related to mediation service for multiple types of electronic money. When receiving receipt information from the recipient terminal 3 and payment information from the payer terminal 2, the service server 1 generates the transaction information 101 including a transaction ID number to execute, for a transaction corresponding to the transaction ID number, a process related to payment performed by the payer 20 and money transfer to the recipient 30.

The service server 1 includes a transaction information acquisition unit 11 that generates the transaction information 101 and holds the generated transaction information 101 in the transaction information holding unit 17 and a money receipt processing unit 12 that executes a money receipt process with the payer terminal 2. The service server 1 also includes an electronic money mediation unit 13 capable of converting the values of the first electronic money and the second electronic money, which are of different types, into each other and converting the first electronic money and the second electronic money into currency. The service server 1 further includes a money transfer processing unit 14 that transfers money from the second account 61 to the recipient account 7 when the condition for transferring money is satisfied. Furthermore, the service server 1 includes an account management unit 16 that acknowledges and manages the balance on the first account 41 and the balance on the second account 61.

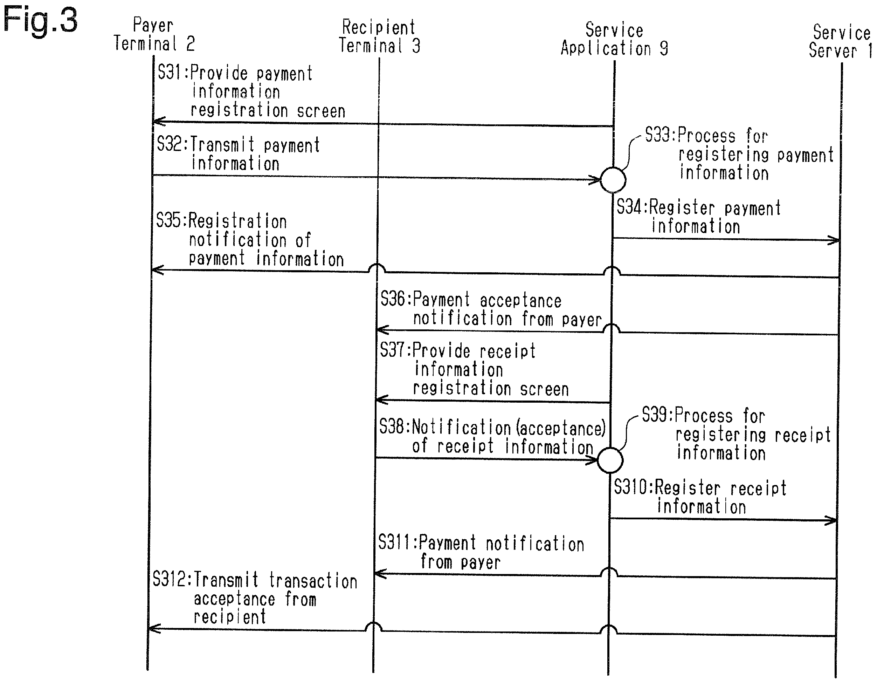

With reference to Figs. 3 to 5, an example of the transaction using the electronic money mediation system of the present embodiment will now be described.
Fig. 3 is a sequence chart showing how the payer 20 and the recipient 30 make an agreement on a procedure related to money transfer.

First, in the payer terminal 2, a screen on which the payer 20 registers payment information is displayed (provided) by the installed ESApp 9 (step S31 in Fig. 3). The payer 20 operates the screen to register the payment information displayed by the ESApp 9 and inputs the payment information (step S32 in Fig. 3). The payer 20 registers, as the payment information, the delivery address, item, and payment price from which the recipient 30 is identified, and the information of, for example, the type of electronic money and account used by the payer 20 for paying money. The ESApp 9 executes a process for registering the input payment information to the service server 1 (step S33 in Fig. 3). The ESApp 9 may add to the payment information, for example, the information related to the payer 20 set for the ESApp 9 or the payer terminal 2. The delivery address from which the recipient 30 is identified includes the information necessary for notification such as electronic mail from the service server 1 to the recipient terminal 3, for example, the address, name, or electronic mail address.

In the registration process, the ESApp 9 notifies the service server 1 of the payment information input by the payer 20 and registers the payment information in the service server 1 (step S34 in Fig. 3).

Upon registration of the payment information, the service server 1 uses the registered payment information to notify, via electronic mail or the like, the payer terminal 2 that the payment information has been registered (step S35 in Fig. 3). This allows the payer terminal 2 to confirm that the input payment information has been registered in the service server 1.

Further, upon the registration of the payment information, the service server 1 notifies, via electronic mail or the like, the recipient terminal 3 of the information necessary for the recipient 30 to accept the payment from the payment information registered by the payer 20 (step S36 in Fig. 3). The information necessary for the recipient 30 includes, for example, the information or payment amount of the payer 20. The ESApp 9 of the recipient terminal 3 coordinates with the service server 1 to cause the recipient terminal 3 to display a registration screen for receipt information (step S37 in Fig. 3). The recipient 30 operates the screen to register the receipt information displayed by the ESApp 9 and inputs the receipt information (step S38 in Fig. 3). The recipient 30 registers information such as the address and name of the recipient 30 and the type and account of electronic money used for the receipt. The ESApp 9 executes a process for registering the input receipt information to the service server 1 (step S39 in Fig. 3). The ESApp 9 may add to the receipt information, for example, the information related to the recipient 30 set for the ESApp 9 or the recipient terminal 3.

In the registration process, the ESApp 9 notifies the service server 1 of the receipt information that is based on an input or the like of the recipient 30 and registers the receipt information in the service server 1 (step S310 in Fig. 3). Upon registration of the receipt information, the service server 1 uses the registered receipt information to notify, via electronic mail or the like, the recipient terminal 3 that the payer 20 is paying money (step S311 in Fig. 3). Then, the service server 1 uses the registered receipt information to notify, via electronic mail or the like, the payer terminal 2 that the recipient 30 is receiving the money paid by the payer 20 (transaction acceptance) (step S312 in Fig. 3). This allows the payer terminal 2 to confirm that the recipient 30 has accepted the receipt of the payment and has registered the receipt information in the service server 1.

In the service server 1, the transaction information acquisition unit 11 uses the registered payment information and receipt information to generate the transaction information 101 that is necessary for a transaction. The transaction information 101 includes the payer information 102 and the recipient information 103.

The payer information 102 includes that the type of electronic money the payer 20 uses for settlement is the first electronic money and that the first electronic money server 4 includes the payer account 5. That is, the payer 20 selects the first electronic money for settlement from multiple types of electronic money that can be settled at the service server 1. The payer information 102 includes, for example, the address, name, company name, telephone number, and email address of the payer 20 and the sending address of an item.

The recipient information 103 includes that the type of electronic money the recipient 30 uses for settlement is the second electronic money and that the second electronic money server 6 includes the recipient account 7. That is, the recipient 30 selects the second electronic money for settlement from multiple types of electronic money that can be settled at the service server 1. The recipient information includes, for example, the address, name, company name, telephone number, and email address of the recipient 30.

In an individual transaction, it is unclear whether an agreement on the transaction has been made for the transaction. The above-described processes for registering the payment information and the receipt information allow both the payer 20 and the recipient 30 to reach an agreement on the receipt and payment using the electronic money transfer service.

The agreement can be reached more explicitly. For example, the payer 20 may register payment information including a permission document in the service server 1. Further, the service server 1 may notify the recipient terminal 3 of the information necessary for the recipient 30 including the permission document registered by the payer 20. In addition, the receipt information may include whether the recipient 30 consents to (accepts) a permission document. In the service server 1, the receipt information including whether the recipient 30 consents to the permission document may be registered. This allows the service server 1 to confirm whether the recipient 30 consents to (accepts) a permission document and execute a transaction process according to whether the recipient 30 consents to (accepts) the permission document.

The service server 1 holds the created transaction information 101 in the transaction information holding unit 17 and manages a single transaction using the transaction information 101 at least in a period until completion of a transaction.

More specifically, the service server 1 uses the transaction information 101 to start the service of deposit, withdrawal, and safekeeping using electronic money (transaction information acquisition step).

To start the service, the service server 1 may notify the payer terminal 2 or the recipient terminal 3 that the service has started. For the notification of the payer terminal 2 or the recipient terminal 3 from the service server 1, a usable method is selected. The usable method includes, for example, electronic mail and a notification function of the first electronic money server 4 or the second electronic money server 6.

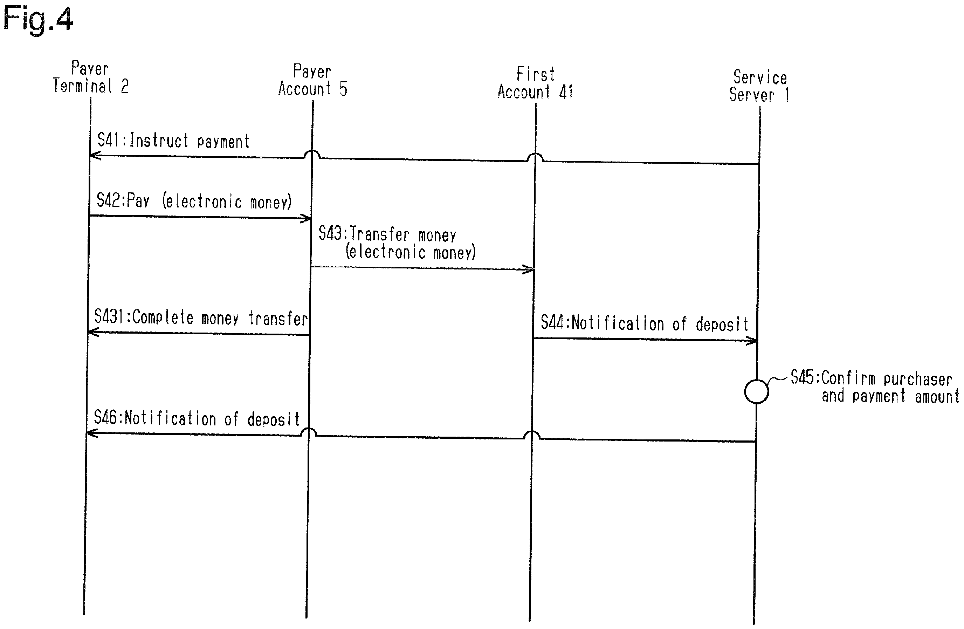

Fig. 4 is a sequence chart showing the payment of money or the like using electronic money by the payer 20 (money receipt processing step) as a second stage of the transaction.

First, when the procedure of the service is started, the service server 1 notifies the payer terminal 2 of a payment instruction via electronic mail or the like (step S41 in Fig. 4). The payment instruction includes the number of the first account 41 to which money is transferred and the amount of electronic money which is sent to the first account 41. That is, on condition that the receipt information includes that the payment is accepted, the service server 1 notifies the payer terminal 2 to deposit a payment amount included in the payment information to the first account 41.

For example, in contrast, on condition that the receipt information includes that the payment is not accepted, the service server 1 may notify the payer terminal 2 that the payment is not accepted and stops receiving deposit from the payer 20 to the first account 41.

When the payer terminal 2 is notified of a payment instruction, the payer 20 operates the payer terminal 2 to execute a payment operation of electronic money from the payer account 5 to the first account 41 (step S42 in Fig. 4). This causes the first electronic money to be transferred from the payer account 5 to the first account 41 (step S43 in Fig. 4). At this time, the payer account 5 and the first account 41 are the same type of account for the first electronic money. Thus, the cost or commission for the first electronic money from the payer account 5 to the first account 41 is normally free or relatively low. This is to facilitate the use of the first electronic money. Further, the function corresponding to the payer account 5 of the first electronic money server 4 notifies the payer terminal 2 of a money transfer completion notification indicating that the transfer of electronic money from the payer account 5 to the first account 41 is completed (step S431). This allows the payer 20 to confirm that the transfer of money is completed.

When electronic money is deposited to the first account 41, a deposit notification including the information related to the deposit is sent from the first account 41 to the service server 1 (step S44 in Fig. 4). More specifically, the deposit notification is a notification about the information of deposit from the first electronic money server 4 to the first account 41 of the service server 1. The deposit notification may include the information of the payer 20 and the information of the payment amount and also include the transaction ID number. The service server 1 verifies the transaction information 101 with the deposit information to confirm the payer 20 and confirm the payment amount (step S45 in Fig. 4). At this time, if the transaction ID number is included, the transaction ID number may be used to verify the transaction information 101 with the deposit information.

When confirming through the verification that the transaction information 101 matches the deposit information about the payer 20 and the payment amount, the service server 1 notifies the payer terminal 2 via electronic mail or the like that the money for the transaction has been deposited (step S46 in Fig. 4). This notification may include, for example, the deposited amount of the first electronic money or where money has been transferred to. This allows the payer 20 to confirm through operation of the payer terminal 2 that the payment has been made.

When the service server 1 confirms through the verification that the transaction information 101 does not match the deposit information about at least one of the payer 20 and the payment amount, only if the procedure content such as the deposit amount includes an error, the first electronic money server 4 used by the payer 20 may issue a notification that urges the payer terminal 2 to execute the procedure to correct the transfer amount and retransfer money. In addition, for example, when the correction of the transfer amount and the retransfer of money that correspond to the procedure notified for the payer terminal 2 are not performed or when money cannot be retransferred, a notification about the cancellation of the transaction may be issued.

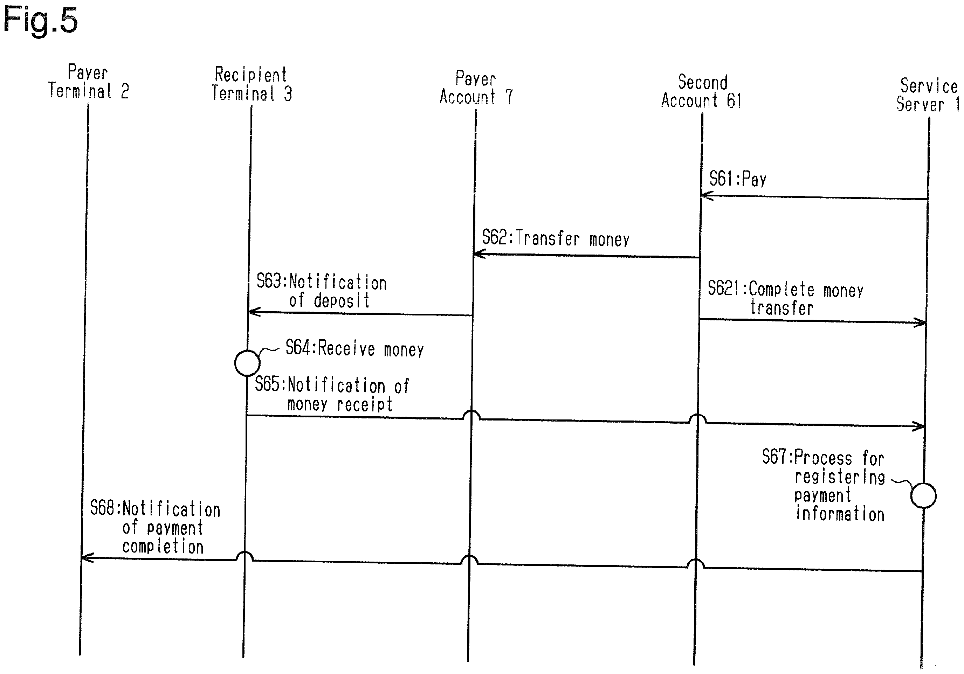

Fig. 5 is a sequence chart showing from when the recipient 30 receives money in a certain electronic money service to when the transaction procedure is completed (money transfer processing step) as a third stage of the transaction.

When the payer 20 completes payment, the service server 1 instructs to pay, to the recipient 30 in the second electronic money, the amount in the first electronic money that has been temporarily safe kept (commissioned) from the payer 20 (step S61 in Fig. 5). At this time, the service server 1 calculates the amount of the second electronic money corresponding to the payment equivalent at the money transfer processing unit 14. The payment equivalent may be the amount paid by the payer 20, an amount obtained by subtracting the charge of the service from the amount paid by the payer 20, or an amount obtained by deducting a tax or advance money. At the time of deposit, the payer 20 pays the amount of the first electronic money corresponding to the payment amount. Thus, the calculated amount of the second electronic money can be spent from the first electronic money that has been deposited from the payer 20 to the first account 41.

In response to the payment instruction, the money transfer processing unit 14 transfers the amount of the second electronic money corresponding to the payment equivalent from the second account 61 to the recipient account 7 of the recipient 30 (step S62 in Fig. 5). When electronic money is deposited to the recipient account 7, the deposit notification including the information related to the deposit is sent from the recipient account 7 to the recipient terminal 3 (step S63 in Fig. 5). In detail, in the deposit notification, the information of the recipient account 7 is sent from the second electronic money server 6 to the recipient terminal 3. Further, the money transfer processing unit 14 (service server 1) receives a money transfer completion notification, which indicates that the transfer of electronic money from the second account 61 to the recipient account 7 is completed, from the function corresponding to the second account 61 of the second electronic money server 6 (step S621). This allows the service server 1 to confirm that the transfer of electronic money is completed.

The recipient terminal 3 executes the money receipt process in reference to the deposit notification (step S64 in Fig. 5). The money receipt process is to, for example, verify the deposit amount with the payment amount that has been accepted. After completing the money receipt process, the recipient terminal 3 notifies the service server 1 of money receipt information for registration (step S65 in Fig. 5).

The service server 1 executes a process for registering payment information in reference to, for example, the money transfer completion notification from the second electronic money server 6 or the registration notification of the money receipt information from the recipient terminal 3 (step S67 in Fig. 5). In the process for registering payment information, the service server 1 registers the completion of a transaction of the transaction information 101 held by the transaction information holding unit 17 and then completes the process related to the transaction. Further, the service server 1 notifies the payer 20 of a payment completion notification via electronic mail or the like (step S68 in Fig. 5). The payment completion notification may include, for example, the completion of money receipt by the recipient 30 or the completion of the procedure related to the receipt.

Account Balance Management Process

In the present embodiment, the service server 1 includes the above-described account management unit 16.

The account management unit 16 acknowledges, manages, and adjusts the balance on the first account 41 and the balance on the second account 61. For example, in the account management unit 16, the first account 41 includes an upper limit value and a lower limit value of the balance of electronic money corresponding to the first account 41, and the second account 61 includes an upper limit value and a lower limit value of the balance of electronic money corresponding to the second account 61. The electronic money in the first account 41 and the electronic money in the second account 61 may differ in demand because of, for example, the difference in the amount of circulation. Thus, it is preferred that the upper limit value and the lower limit value be set in correspondence with the demand.

The account management unit 16 makes adjustment such that the balance of electronic money on the first account 41 is between the set upper limit value and the set lower limit value. For example, the account management unit 16 executes a process of at least one of paying out electronic money from the account when the balance on the first account 41 exceeds the set upper limit value and adding electronic money to the account when the balance on the second account 61 falls below the set lower limit value. Further, in the same manner as the adjustment for the balance of electronic money on the first account 41, the account management unit 16 adjusts the balance of electronic money on the second account 61.

When the balance on an account reaches its upper limit value or lower limit value, a larger amount of money than the amount settled in an individual transaction is paid out or added, thereby decreasing the number of conversion or purchase of electronic money. This limits trouble occurring in the conversion or purchase of electronic money and reduces the spending of a commission paid for a financial institution or an electronic money management group during the conversion or purchase.

In the service server 1, when a transaction ends, the total of the balance (value) on the first account 41 and the balance (value) on the second account 61 becomes equal to the total prior to the transaction. That is, in the service server 1, the total balance on the accounts remains unchanged. Further, when a person owns three or more accounts, the ratio of the balance on each account sometimes varies from the initial ratio and the total balance (total value) on all the accounts remains unchanged. This allows the balances on the accounts to be adjusted between the accounts. If the types of electronic money that can be handled by three or more accounts are different, the number of combinations of the types of electronic money that can be mediated by the service server 1 increases.

For example, when making an adjustment to limit an increase in the balance on an account through payout, the value equivalent to the amount of electronic money paid out is entirely or partially added to the account of another type of electronic money that differs from the electronic money paid out. When the number of other electronic money accounts subject to adding is plural, an account having a low fulfillment rate relative to the upper limit value or the lower limit value set to the account is selected to add money to the selected account. This reduces the risk of the balance on an amount becoming excessive.

Further, for example, when making adjustment to limit a decrease in the balance of an account by adding money, the account management unit 16 pays out and adds electronic money that needs adding from another account for electronic money that differs in type from the electronic money that needs adding. In addition, when there is a number of accounts for another electronic money subject to payout, one of the accounts having a high fulfillment rate relative to an upper limit value or a lower limit value set for the accounts is selected to transfer the electronic money paid out from the account, so that money is added to accounts subject to adding. This reduces the risk of the balance on an amount becoming insufficient.

The present embodiment has the following advantages.
(1) In a transaction using electronic money between the recipient 30 and the payer 20, who are both public consumers, different types of electronic money can be used. This increases the convenience for a transaction between different types of electronic money.
(2) The recipient 30 is notified of payment information. This allows the recipient 30 to know the payment content and to be notified that receipt information needs to be registered. The service server 1 receives the receipt information as a response to the payment information. This allows the payment information and the receipt information to be properly associated with each other. That is, the payer 20 and the recipient 30 can execute registration more efficiently.
(3) A notification about the transfer of money to the first account 41 is issued on condition that the recipient 30 accepts payment by the payer 20. This allows the payer 20 to deposit properly.
(4) The payer terminal 2 is notified that payment is not accepted, and the transfer of money from the payer 20 to the first account 41 is not received. This limits unnecessary deposit performed by the payer 20.
(5) The recipient 30 is notified of an acceptance document received from the payer 20. This allows the recipient 30 to receive payment after confirming the acceptance document in a bilateral transaction. Accordingly, the safety of a transaction increases.
(6) It is determined whether the deposited amount of the first electronic money is correct. This allows for smooth transaction.
(7) The balance on the first account 41 and the balance on the second account 61 are maintained between the upper limit value and the lower limit value set through adjustment that is performed by payout or adding. This maintains the amount of money held in the first account 41 and the second account 61 at a correct amount. Further, when the balance on the first account 41 and the balance on the second account 61 reach the set upper limit value or lower limit value, the number of times of payout or adding is reduced by paying out or adding a large amount of money. This also reduces trouble and commission.

The above-described embodiment may be modified as follows. The present embodiment and the following modifications can be combined as long as the combined modifications remain technically consistent with each other.

In the above-described embodiment, the payer 20 operates the ESApp 9 to register payment information. Instead, payment information may be registered by the payer filling in an entry form (interface) displayed on, for example, a browser.

In the above-described embodiment, the recipient 30 operates the ESApp 9 to register receipt information. Instead, receipt information may be registered by the recipient filling in an entry form (interface) displayed on, for example, a browser.

The service server 1 may instruct that payment be notified to the payer terminal 2 via the ESApp 9 or a website instead of electronic mail or the like. For example, while the payer may be able to input the amount to be paid (the amount of electronic money), the amount included in the payment instruction simply needs to be set in the ESApp or a website in advance. The setting of an amount limits erroneous setting of an input.

The service server 1 may issue a payment permission notification for the recipient terminal 3 via the ESApp or a website instead of electronic mail.

The service server 1 may issue a transaction permission notification or a payment completion notification to the payer 20 via the ESApp or a website instead of electronic mail.

The service server 1 does not have to include the account management unit 16.

Even if the balance on an account has not reached its upper limit value or lower limit value, a larger amount of money than an amount of money settled in an individual transaction may be paid out or added if necessary. This reduces the number of times of conversion or purchase of electronic money and limits trouble occurring in the conversion or purchase of electronic money, thereby reducing the spending of a commission paid for a financial institution or an electronic money management group during the conversion or purchase.

In the above-described embodiment, the transaction information acquisition unit 11 receives the receipt information corresponding to the payment information. Instead, the transaction information acquisition unit may verify the payment information and the receipt information that are individually received with each other to associate the receipt information with the payment information and create transaction information. This allows the receipt information and the payment information to be associated with each other. Even if the receipt information and the payment information are acquired at different timings, the receipt information and the payment information can be properly associated with each other.

In the above-described embodiment, in the service server 1, two types of electronic money (i.e., first electronic money and second electronic money) can be used for payment and receipt. Instead, in the service server, the number of accounts of which the accounts are acknowledgeable may be increased so that the number of types of electronic money usable for payment and receipt increases. This increases the convenience for electronic money.

In addition to multiple types of electronic money, the service server may be able to select at least one of one or more currencies, one or more credit cards, one or more debit cards, and one or more prepaid cards may be selectable for a transaction.

The technical ideas obtainable from the above-described embodiment and modifications will now be described.

The electronic money mediation system, wherein the account management unit adds to an other account all of or part of an amount equivalent to the paid-out electronic money, the other account being used for electronic money that differs in type from the paid-out electronic money, a fulfillment rate relative to an upper limit value or a lower limit value set for the other account being low.

In such a configuration, in multiple accounts managed by the service server 1, money is moved from an account with a high balance to an account with a low balance. This reduces deposit and withdrawal that are made externally. Thus, the convenience for money management is high.

The electronic money mediation system, wherein the account management unit adds, through transfer from an other account, electronic money that needs the adding, the other account being used for electronic money that differs in type from the electronic money that needs the adding, a fulfillment rate relative to an upper limit value or a lower limit value set for the other account being high.

In such a configuration, in multiple accounts managed by the service server 1, money is moved from an account with a high balance to an account with a low balance. This reduces deposit and withdrawal that are made externally. Thus, the convenience for money management is high.

### DESCRIPTION OF THE REFERENCE NUMERALS

1) Service Server; 2) Payer Terminal; 3) Recipient Terminal; 4) First Electronic Money Server; 5) Payer Account; 6) Second Electronic Money Server; 7) Recipient Account; 9) Service Application (ESApp); 11) Transaction Information Acquisition Unit; 12) Money Receipt Processing Unit; 13) Electronic Money Mediation Unit; 14) Money Transfer Processing Unit; 16) Account Management Unit; 17) Transaction Information Holding Unit; 20) Payer; 30) Recipient; 41) First Account; 61) Second Account; 101) Transaction Information; 102) Payer Information; 103) Recipient Information; N) Network

## Claims

1. An electronic money mediation system comprising a service server that mediates payment and receipt using electronic money, wherein
the service server includes
a transaction information acquisition unit that receives payment information from a payer terminal and receives receipt information from a recipient terminal, wherein the transaction information acquisition unit associates the payment information with the receipt information to create transaction information,
a money receipt processing unit that recognizes completion of deposit from a payer to a first account, wherein the first account is used for a first electronic money, a type of the first electronic money is the same as a type designated for payment from the payer in the transaction information, and the service server acknowledges a balance on the first account, and
a money transfer processing unit that transfers a second electronic money from a second account to a recipient in response to the recognition of the deposit from the payer, wherein the second account is used for the second electronic money, an amount of the second electronic money corresponds to a payment equivalent of the first electronic money that has been deposited from the payer to the first account, a type of the second electronic money is different from the type of the first electronic money and designated for receipt by the recipient in the receipt information, and the service server acknowledges a balance on the second account.

2. The electronic money mediation system according to claim 1, wherein the transaction information acquisition unit notifies the recipient terminal of the payment information received from the payer terminal and receives from the recipient terminal the receipt information corresponding to the payment information.

3. The electronic money mediation system according to claim 1 or 2, wherein the transaction information acquisition unit verifies the payment information received from the payer terminal with the receipt information received from the recipient terminal to associate the receipt information with the payment information and to create the transaction information.

4. The electronic money mediation system according to any one of claims 1 to 3, wherein
the receipt information includes information indicating whether the recipient accepts payment by the payer, and
on condition that the receipt information includes that the payment is accepted, the service server notifies the payer terminal to deposit to the first account a payment amount of the first electronic money included in the payment information.

5. The electronic money mediation system according to claim 4, wherein on condition that the receipt information includes that the payment is not accepted, the service server notifies the payer terminal that the payment is not accepted and stops receiving deposit from the payer to the first account.

6. The electronic money mediation system according to claim 4 or 5, wherein the service server receives the payment information and an acceptance document from the payer terminal to notify the recipient terminal of the payment information and the acceptance document, and the recipient terminal notifies the service server of the receipt information including whether to accept the acceptance document.

7. The electronic money mediation system according to any one of claims 1 to 6, wherein the money receipt processing unit determines whether an amount of the first electronic money that has been deposited to the first account is correct in reference to a comparison with an amount of the first electronic money included in the payment information.

8. The electronic money mediation system according to any one of claims 1 to 7, comprising an account management unit that manages the balance on the first account and the balance on the second account, wherein
the account management unit executes a process of at least one of paying out electronic money from the first account or the second account of which the balance exceeds a set upper limit value or adding electronic money to the first account or the second account of which the balance falls below a set lower limit value.

9. An electronic money mediation method executed in a service server that mediates payment and receipt using electronic money, the electronic money mediation method comprising:
a transaction information acquisition step that associates payment information received from a payer terminal with receipt information received from a recipient terminal to create transaction information;
a money receipt processing step that recognizes completion of deposit from a payer to a first account, wherein the first account is used for a first electronic money, a type of the first electronic money is the same as a type designated for payment from the payer in the transaction information, and the service server acknowledges a balance on the first account; and
a money transfer processing step that transfers a second electronic money from a second account to a recipient in response to the recognition of the deposit from the payer, wherein the second account is used for the second electronic money, an amount of the second electronic money corresponds to a payment equivalent of the first electronic money that has been deposited from the payer to the first account, a type of the second electronic money is different from the type of the first electronic money and designated for receipt by the recipient in the receipt information, and the service server acknowledges a balance on the second account.
